# EUROPÄISCHE PATENTANMELDUNG

(11) **EP 2 168 918 A1**
(43) Veröffentlichungstag der Anmeldung: **31.03.2010**
(21) Anmeldenummer: 08016747.1
(22) Anmeldetag: 24.09.2008
(51) Int. Cl.: C01B 33/44, C08K 3/34

(54) **Nicht-quellfähige, synthetische Schichtsilicate für Polymer-Schichtsilicat-(Nano)composite**

(71) Anmelder: Bayer MaterialScience AG, 51368 Leverkusen (DE)
(72) Erfinder: Nennemann, Arno Dr., 51469 Bergisch Gladbach (DE); Bahnmüller, Stefan Dr., 049514 Singapur (SG); Breu, Josef Prof. Dr., 954444 Bayreuth (DE); Möller, Michael, 95444 Bayreuth (DE); Kalo, Hussein, 95447 Bayreuth (DE)

(57) **Zusammenfassung**

Die vorliegende Erfindung betrifft neuartige nicht-quellfähige Schiclitsilicat-Taktoide sowie ein Verfahren zu deren Herstellung und die Anwendung in Polymermaterialien.

## Beschreibung

Die vorliegende Erfindung betrifft neuartige nicht-quellfähige Schichtsilicat-Taktoide sowie ein Verfahren zu deren Herstellung und die Anwendung in Polymermaterialien.

Schichtsilicate werden für die Herstellung von Polymer-Nanocompositen mit verbesserten Eigenschaften z.B. hinsichtlich Mechanik oder Barriere im Vergleich zu den ungefüllten Polymeren eingesetzt.

Um Schichtsilicate in polymere Materialien einzubringen, wird im Allgemeinen in der Literatur eine Interkalation von Schichtsilicaten im Zwischenschichtraum mit langkettigen Ammonium-oder Phosphoniumionen vorausgesetzt. Hierdurch wird eine Hydrophobisierung, also Kompatibilisierung für die organische Matrix sowie eine Schichtaufweitung erreicht. Letztere Schichtaufweitung ist erforderlich, um das Einbringen in Polymere zu erleichtern, die in den Zwichenschichtraum gelangen sollen und zu einer Exfolierung in-situ, also möglichst weitgehenden Aufspaltung in einzelne Silicatschichten bzw. Taktoide und damit homogenen Verteilung in der Matrix führen sollen. Die mit der Exfolierung einhergehende Erhöhung des Aspektverhältnisses wird als wesentliche Bedingung für die Herstellung von Potymer-Schiehtsiticat-Nanocompositen mit verbesserten Eigenschaften angesehen (H. A. Stretz, D. R. Paul, R. Li, H. Keskkula, P. E. Cassidy, Polymer 2005, 46 2621-2637). Zur Begriffsklärung Exfolierung, bzw. Delamination wird auf G. Lagaly, J. E. F. C. Gardolinsky, Clay Miner. 2005, 547-556 verwiesen. Interkalierbare und cxfolierbare Schichtsilicate sind beispielsweise Montmorillonite oder Hectorite aus der Klasse der Smectile.

Nachteil beim Einsatz langkettiger Ammonium- oder Phosphoniumionen für die Modifizierung der Schichtsilicate ist das Entstehen geordneter, interkalierter Strukturen (G. Lagaly, Solid State Ionics 1986, 22 43-51). Die Schichten der Silicate werden dabei über hydrophobe und van-der-Waals-Wechselwirkungen planparallel mit einer weiten lateralen Ausdehnung zusammengehalten. Die polymeren Trägermatenalien müssten in den hochgeordneten Zwischenschichtraum gelangen und sich hierzu entknäueln und strecken und trotz attraktiver Wechselwirkungen zu den Modifikatoren über eine weite Strecke in diese geordnete Zwischenschichtstruktur eindringen (E. Ruitz-Hitzky, A. van Meerbook, in Handbook of Clay ScienceEds.: F. Bergaya, B. K. G. Theng, G. Lagaly), EIsevier, Amsterdam 2006, p. pp. 583-621, F. Gardebien, A. Gaudel-Siri, J. L. Bredas, R. Lazzaroni, J.Phys.CHem.B 2004, 108 10678-10686). Eine Entknäuelung und Streckung ist entropisch unvorteilhaft und das Eindringen wird durch die attraktiven Wechselwirkungen gebremst. Diese Interkalation der Polymerketten in den aufgeweiteten Zwischenschichtraum sorgt nur für eine geringe Anbindung der Kanten der Schichtsilicattaktoide an die polymere Matrix. Weiterhin ist eine große Menge an Modifikator für die Modifizierung von Schichtsilicaten erforderlich (J. W. Jordan, J.Phys.Chem. 1949, 53 294-306), da bisher keine Differenzierung zwischen der inneren Oberfläche (=Zwischenschichtraum) und der äußeren Grenzfläche möglich war.

Die Synthese von Schichtsilicaten wird beschrieben in J. T. Kloprogge, S. Komarneni, J. E. Amonette, Clays Clay Miner. 1999, 47 529-554. Synthetische Schichtsilicate werden bisher analog zu den natürlich vorkommenden Schichtsilicaten eingesetzt, d.h. sie werden ebenfalls mit langkettigen Ammonium- oder Phosphoniumionen modifiziert um dann zu interkalierten bzw. möglichst weitgehend exfolierten Nanocompositen zu führen (L. T. J. Korley, S. M. Liff, N. Kumar, G. H. McKinley, P. T. Hammond, Macromolecules 2006, 39 7030-7036). Nicht bekannt ist die gezielte Überführung von quellfähigen in nicht-quellfähige Taktoide (Schichtstapel) für den Einsatz in Polymercompositen. Die gängige Meinung ist, dass eine weitgehende Exfolierung für die Verbesserung der Compositeigenschaften erforderlich ist. Diese Exfolierung geschieht in der Regel in situ durch chemische oder physikalisch-mechanische Prozesse während der Verarbeitung.

Klassische Füllstoffe wie Talkum oder Glimmer sind ebenfalls Schichtsilicate, die jedoch nicht oder nur unter extremen Bedingungen interkalierbar und nicht exfolierbar sind (K. Tamura, S. Yokoyama, C. S. Pascua, H. Yamada, Chem.Mater, 2008, 20 2242-2246). Setzt man diese als Compositmaterialien ein, so sind die Eigenschaften deutlich schlechter als beim Einsatz von quellfähigen Schichtsilicaten, z.B. Montmorilloniten, die zu interkalierten bzw. exfolierten/teilexfolierten Nanocompositen führen. Talkum oder Glimmer führen zu klassischen Kompositen mit schlechter Anbindung und Verteilung des Füllstoffes. Dies resultiert in nicht-transparenten Materialien mit vergleichsweise schlechteren mechanischen Eigenschaften.

Ein Syntheseverfahren für Smectite im geschlossenen Tiegelsystem ist beschrieben in (J. Breu, W. Seidl, A. J. Stoll, K. G. Lange, T. U. Probst, Chem.Mater. 2001, 13 4213-4220). Nachteil dieses Verfahrens sind die relativen hohen Prozesstemperaturen sowie die Notwendigkeit hochreiner und trockener Einsatzstoffe.

EP 0326019A2 beschreibt die teilsynthetische Darstellung von quell- und nichtquellfähigen Glimmern. Dabei verwendet man bereits existierende, natürliche Schichtsilicate (Talk o.ä.) und Siliziumfluoride der Formel M₂SiF₆ als Ausgangsstoffe. JP002000247630AA und JP002000247629AA beschreiben die teilsynthelische Synthese von Schichtsilicaten über eine wässrige Zwischenstufe.

JP000011199222AA und weitere beschreiben die teilsytitbetische Schichtsilicatsynthese bei Temperaturen oberhalb 1400°C unter Verwendung von ausschließlich Mg²⁺ für die Oktaederschicht. Nicht beschrieben in diesen Anmeldungen ist das erfindungsgemäße Verfahren auf Basis der Verwendung eines amorphen Glases und einfachen, anorganischen Verbindungen wie Kieselsäure, binäre Fluoride, Carbonate und/oder Oxide als Precursoren.

DE000069521136T2 und weitere beschreiben die Hydrothermal-Synthese von Smectiten aus einer wässrigen Reaktionsmischung. Nicht beschrieben ist die Hochtemperatur-Schmelzsynthese. Es ist allgemein bekannt, dass die Taktoidgrößen von Smectiten hydrothermalen und schmelzsynthetischen Ursprungs deutlich variieren. Erfindungsgemäß sind Schichtsilicattactoide mit hohen Aspektverhältnissen vorteilhaft. Die Hydrothermalsynthese von Na-Hectorit liefert beispielsweise nur Taktoide mit 20-80 nm Größe (Bestimmung der Teilchengröße aus Transmissionselektranenmikroskopischen Aufnahmen). Zusätzlich ist die Anwendung hydrothermaler Synthesen aufgrund der langen Reaktionszeiten von mehreren Tagen bis Wochen und der hohen Drücke für industrielle Prozesse eher uninteressant.

Ausgehend vom Stand der Technik bestand nun die Aufgabe, Schichtsilicate bereitzustellen, bei denen eine Modifikation der Zwischenschichten mit langkettigen Ammonium- oder Phosphoniumionen sowie eine Exfolierung für eine Einarbeitung zu Polymer-(Nano)compositen nicht mehr notwendig ist.

Überraschend wurde nun gefunden, daß synthetische Schichtsilicate in Form von nichtquellfähigen, steifen Taktoiden ("Schichtstapeln") zu Polymerkompositen mit deutlich verbesserten Eigenschaften führten, ohne daß eine Zwischenschichtmodifikation bzw. der Erhalt von exfolierten Strukturen erforderlich war. Es konnten zudem selektiv die äußeren Oberflächen der Taktoide organophiliert werden. Dieser Schritt erforderte im Gegensatz zur herkömmlichen Organophilierung nur einen Bruchteil der Menge des Modifikators, da die Zwischenschichträume nicht belegt werden. Da der Schritt der Exfolierung in situ des organophilierten Schichtsilicats entfiel, konnte die Auswahl des kationischen organischen Modifikators flexibler ausfallen. Man konnte nun auf längerkettige "Alkylspacer" verzichten und sich auf die Angleichung der Grenzflächenspannungen konzentrieren um die bestmögliche Wechselwirkung zur Polymermatrix zu erzielen.

Ermöglicht wurde dies durch die Verwendung eigens synthetisierter Schichtsilicate mit klar definierten Quellungseigenschaften und großen theoretischen Aspektverhältnissen. Mit dem beschriebenen Verfahren lassen sich je nach Stöchiometrie und Prozessparameter mittlere Taktoidgrößen von 1µm bis 300µm realisieren (Bestimmung der Tactoidgrößen über Rasterelektronenmikroskopische Aufnahmen). Im Vergleich dazu erhält man aus einer Hydrothermalsynthese von Na-Hectorit beispielsweise nur Taktoide mit 20-80 nm Größe (Bestimmung der Tactoidgrößen über Transmissionselektronenmikroskopische Aufnahmen). Natürliche Montmorillonite z.B. sind in der Größenordnung bis ca. 400 nm einzuordnen (Bestimmung der Tactoidgrößen über Transmissionselektronenmikroskopische Aufnahmen). Glimmer können zwar Taktoide im cm-Bereich ausbilden, jedoch verhindert deren stark eingeschränkte intrakristalline Reaktivität deren materialwissenschaftliche Verwertung. Neben bereits früher beschrieben Sytheseverfahren für Smectitc im geschlosenen Tiegelsystem zeigte ein erfindungsgemäßes Verfahren durch energieeffiziente Heizung über Hochfrequenzinduktion, die Verwendung preisgünstiger Ausgangsverbindungen (kein hoher Reinheitsgrad erforderlich, keine Vortrocknung der Ädukte erforderlich, breitere Äduktpalette wie z.B. günstige Carbonate) und einer stark verkürzten Synthesedauer sowie einer möglichen Mehrfachverwendung des Tiegels gegenüber der Synthese im geschlossenen Tiegelsystem deutliche Vorteile.

Gegenstand der Erfindung ist ein Verfahren zur Herstellung von nicht-quellfähigen Schichtsilicat-Taktoiden in dem
A) synthetische Smectite der Formel [M_{n/Valenz}]^{inter} [M^{I}ₘ M^{II}ₒ]^{oct} [M^{III}₄]^{tet} X₁₀Y₂ über Hochtemperatur-Schmelzsynthese hergestellt werden, wobei
   - M: Metallkationen mit Oxidationsstufe 1 bis 3 sind
   - M^{I}: Metallkationen mit Oxidationsstufe 2 oder 3 sind, bevorzugt Mg, Al, oder Fe
   - M^{II}: Metallkationen mit Oxidationsstufe 1 oder 2 sind
   - M^{III}: Atome mit Oxidationsstufe 4 sind
   - X: Di-Anionen sind
   - Y: Mono-Anionen sind
   - m: ≤ 2,0 für Metallatome M^{I} der Oxidationsstufe 3; ≤ 3,0 für Metallatome M^{I} der Oxidationsstufe 2
   o ≤ 1,0
   Schichtladung n = 0,2 bis 0,8
B) das Zwischenschichtkation M falls es nicht bereits eine Hydrationsenthalpie von - 6282 bis - 406 [kJ/mol] bevorzugt von - 4665 bis -1360 [kJ/mol] aufweist durch Kationentausch gegen ein solches ersetzt und das Schichtsilicat im Wässrigen dispergiert wird
C) anschließend dann M durch Kationentausch gegen ein Kation mit Hydrationsenthalpie von -405 bis 0 [kJ/mol] bevorzugt -322 bis -277 [kJ/mol] ersetzt wird und
D) gegebenenfalls abschließend die äußeren Oberflächen durch kationische Verbindungen, ionische und nichtionische Tenside bzw. Amphiphile, Metallkomplexe, Polyelektrolyte, Polymere oder deren Vorstufen, oder Silane ganz oder teilweise belegt werden.

Ein weiterer Gegenstand der Erfindung sind auf diese Weise erhältliche nicht-quellfähige Schichtsilicat-Taktoide sowie deren Einsatz in Polymercompositen.

Bevorzugt hat M die Oxidationsstufe 1 oder 2. Besonders bevorzugt ist M Li⁺, Na⁺, Mg²⁺, oder eine Mischung zweier oder mehrerer dieser Ionen.

M^{I} ist bevorzugt Mg²⁺, Al³⁺, Fe²⁺, Fe³⁺ oder eine Mischung zweier oder mehrerer dieser lonen.

M^{II} ist bevorzugt Li⁺, Mg²⁺ oder eine Mischung dieser Kationen.

M^{III} ist bevorzugt ein vierwertiges Siliziumkation.

X ist bevorzugt O²⁻.

Y ist bevorzugt OH' oder F', besonders bevorzugt F,

Die Schichtladung n ist bevorzugt 0,35 bis 0,65.

Synthetische Smectite in A) der Formel [M_{n/Valenz}]^{inter} [M^{I}ₘ M^{II}ₒ]^{oct} [M^{III}₄]^{tet} X₁₀Y₂ werden hergestellt indem Verbindungen der gewünschten Metalle (Salze, Oxide, Gläser) in stöchiometrischem Verhältnis in einem offenen oder geschlossenen Tiegelsystem zur homogenen Schmelze erhitzt und anschließend wieder abgekühlt werden.

Bei der Synthese im **geschlossenen Tiegelsystem** werden als Ausgangsverbindungen Alkalisalze/Erdalkalisalze, Erdalkalioxide und Siliziumoxide, bevorzugt binäre Alkalifluoride/Erdalkalifluoride, Erdalkalioxide und Siliziumoxide besonders bevorzugt LiF, NaF, KF, MgF₂, MgO, Quarz eingesetzt.

Die Mengenverhältnisse der Ausgangsverbindungen betragen 0,4-0,6 mol F⁻ in Form der Alkali-/Erdalkalifluoride pro mol Siliziumdioxid und 0,4-0,6 mol Erdalkalioxid pro mol Siliziumdioxid, bevorzugt 0,45-0,55 mol F⁻ in Form der Alkali-/Erdalkalifluoride pro mol Siliziumdioxid und 0,45-0,55 mol Erdalkalioxid pro mol Siliziumdioxid, besonders bevorzugt 0,5 mol F⁻ in Form der Alkali-/Erdalkalifluoride pro mol Siliziumdioxid und 0,5 mol Erdalkalioxid pro mol Siliziumdioxid

Die Beschickung des Tiegels erfolgt bevorzugt in der Form, dass die flüchtigeren Substanzen zuerst eingewogen werden, danach das Erdalkalioxid am Schluss Siliziumoxid. Typischerweise wird ein hochschmelzender Tiegel aus chemisch inerten oder reaktionsträgen Metall, vorzugsweise Molybdän oder Platin verwendet.

Bevorzugt wird der beschickte, noch offene Tiegel vor dem Verschließen im Vakuum bei Temperaturen zwischen 200°C und 1100°C, bevorzugt zwischen 400 und 900°C ausgeheizt um Restwasser und flüchtige Verunreinigungen zu entfernen. Experimentell wird bevorzugt so verfahren, daß der obere Tiegelrand rot glüht während der untere Tiegelbereich niedrigere Temperaturen aufweist.

Optional wird eine Vorsynthese im druckfest verschlossenen Tiegel für 5-20 min bei 1700 bis 1900°C, besonders bevorzugt bei 1750 bis 1850°C durchgeführt um die Reaktionsmischung zu homogenisieren.

Das Ausheizen, sowie die Vorsynthese wird typischerweise in einem Hochfrequenz-Induktionsofen durchgeführt. Der Tiegel wird dabei durch Schutzatmosphäre (z.B. Argon), verringerten Druck oder einer Kombination vor Oxidation geschützt.

Die Hauptsynthese wird mit einer dem Material angepassten Temperaturrampe durchgeführt. Dieser Schritt wird bevorzugt in einen Graphit-Drehrohrofen mit horizontaler Ausrichtung der Drehachse durchgeführt. Im ersten Heizschritt wird die Temperatur von RT auf 1600 bis 1900°C, bevorzugt auf 1700 bis 1800°C mit einer Heizrate von 1 bis 50°C/min, bevorzugt mit 10 bis 20°C/min erhöht. Im zweiten Schritt wird bei 1600 bis 1900°C, bevorzugt bei 1700 bis 1800°C geheizt. Die Heizphase der zweiten Stufe dauert bevorzugt 10 bis 240 min, besonders bevorzugt 30 bis 120 min. Im dritten Schritt wird die Temperatur auf einen Wert von 1100 bis 1500°C, bevorzugt von 1200 bis 1400°C mit einer Kühlrate von 10-100°C/min, bevorzugt 30 bis 80°C min gesenkt. In einem vierten Schritt wird die Temperatur mit einer Kühlrate von 0,5 bis 30°C/min, bevorzugt 1 bis 20°C/min auf einen Wert von 1200 bis 900°C bevorzugt 1100 bis 1000°C gesenkt. Die Reduktion der Heizrate nach dem vierten Schritt auf Raumtemperatur erfolgt mit 0,1-100°C/min, bevorzugt unkontrolliert durch Abschalten des Ofens.

Typischerweise wird unter Schutzgas, wie z.B. Ar oder N₂ gearbeitet.

Das Schichtsilicat wird als kristalliner, hygroskopischer Feststoff nach dem Aufbrechen des Tiegels erhalten.

Bei der Synthese im **offenen Tiegelsystem** wird in einem ersten Schritt eine Glasstufe, der allgemeinen Zusammensetzung wSiO₂·xM^{a}·yM^{b}·zM^{c} dargestellt, wobei w,x,y,z voneinander mengenmäßig unabhängige oxidische Bestandteile des Glases,
vorzugsweise mit 5<w<7 ; 0<x<4 ; 0≤y<2; 0≤z<1,5
besonders bevorzugt w=6, x=1, y=1, z=0 sind.

M^{a},M^{b},M^{c} können unabhängig voneinander Metalloxide, bevorzugt Li₂O, Na₂O, K₂O, Rb₂O, MgO, besonders bevorzugt Li₂O, Na₂O, MgO sein. Es gilt M^{a} ungleich M^{b} ungleich M^{c}.

Das Glas wird in der gewünschten Stöchiometrie aus den gewünschten Salzen, vorzugsweise den Carbonaten besonders bevorzugt Li₂CO₃, Na₂CO₃ sowie einer Siliziumquelle wie z.B. Siliziumoxide, vorzugsweise Kieselsäure dargestellt. Die pulverförmigen Bestandteile werden durch Erhitzen und schnelles Abkühlen in einen glasartigen Zustand überführt. Bevorzugt wird die Umwandlung bei 900 bis 1500°C, besonders bevorzugt bei 1000 bis 1300°C durchgeführt. Die Heizphase bei der Herstellung der Glasstufe dauert 10 bis 360 min, bevorzugt 30 bis 120 min, besonders bevorzugt 40 bis 90 min. Dieser Vorgang wird typischerweise in einem Glaskohlenstofftiegel unter geschützter Atmosphäre oder reduziertem Druck mittels Hochfrequenzinduktions-Heizung durchgeführt. Die Reduktion der Temperatur auf RT erfolgt durch Abschaltung des Ofens. Die erhaltene Glasstufe wird feingemahlen, was z.B. mittels einer Puivermühle geschehen kann.

Der Glasstufe werden weitere Reaktionspartner im Gewichtsverhältnis 10:1 bis 1:10 zugesetzt um die Stöchiometrie in A) zu erreichen. Bevorzugt sind 5 : 1 bis 1 : 5. Falls nötig kann ein Überschuss der leichtflüchtigen Zusätze von bis zu 10% zugegeben werden.

Diese Reaktionspartner sind beispielsweise Alkali- oder Erdalkaliverbindungen und/oder Siliziumverbindungen, bevorzugt verwendet man leichte Alkali- und/oder Erdalkalifluroide sowie deren Carbonate oder Oxide, sowie Siliziumoxide, besonders bevorzugt verwendet man NaF, MgF₂, LiF und/oder ein ausgeglühtes Gemisch aus MgCO₃Mg(OH)₂ und Kieselsäure.

Anschließend wird das Gemisch über die Schmelztemperatur des Eutektikums der eingesetzten Verbindungen geheizt, bevorzugt 900 bis 1500°C, besonders bevorzugt 1100 bis 1400°C. Die Heizphase dauert bevorzugt 1 bis 240 min, besonders bevorzugt 5 bis 30 min. Das Aufheizen ist mit 50-500°C/min, bevorzugt mit der maximal möglichen Heizrate des Ofens durchzuführen. Die Reduktion der Heizrate nach der Heizphase auf Raumtemperatur erfolgt mit 1-500°C/min, bevorzugt unkontrolliert durch Abschalten des Ofens. Das Produkt wird als kristalliner, hygroskopischer Feststoff erhalten..

Die Synthese wird typischerweise in einen Glaskohenstofftiegel unter inerter Atmosphäre durchgeführt. Die Heizung erfolgt typischerweise durch Hochfrequenzinduktion.

Durch die energiceffiziente Heizung über Hochfrequenzinduktion, die Verwendung preisgünstiger Ausgangsverbindungen (kein hoher Reinheitsgrad erforderlich, keine Vortrocknung der Ädukte erforderlich, breitere Äduktpalette wie z.B. günstige Carbonate) und einer stark verkürzten Synthesedauer gegenüber der Synthese im geschlossenen Tiegelsystem sowie einer möglichen Mehrfachverwendung des Tiegels ist dieses vorgestellte Verfahren wesentlich wirtschaftlicher.

Ist in B) ein Kationentausch erforderlich, so kann dieser gemäß K. A. Carrado, A. Decarreau, S. Petit, F. Bergaya, G. Lagaly, in Handbook of Clay ScienceEds.: F. Bergaya, B. K. G. Theng, G. Lagaly), Elsevier Ltd., Amsterdam 2006, p. pp. 115-139 durchgeführt werden.

Bevorzugt wird das Verfahren so durchgeführt, dass die Zwischenschichtkationen mit der vorgenannten erfindungswesentlichen Hydrationsenthalpie nicht bereits während der Synthese in A), sondern durch einen Kationenaustausch eingeführt werden. Der synthetische Smectit aus A) wird dazu mit einem Überschuss an Salzlösung eines wasserlöslichen Salzes enthaltend das erfindungswesenltiche Kation gemischt und dabei geschüttelt und mit entionisertem Wasser anionenfrci gewaschen. Bevorzugt wird dieser Schritt des Waschens mehrmals wiederholt. Anschließend wird die Suspension dispergiert um den gewünschten Grad der Exfolierung der Taktoide einzustellen. Eine Dispergierung erfolgt physikalisch mittels Rotor-Stator-Dispergator, Kugelmühle, Ultraschall, Hochdruck-Strahldispergierung (z.B. Microfluidizer) oder über thermische Expansion (sog. "Poppcorneffekt"). Bevorzugt erfolgt die Dispergierung mittels Hochdruck-Strahldispergierung (z.B. Microfluidizer).

Zwischenschichtkationen nach Schritt B) sind bevorzugt H⁺, Na⁺, Li¹, Mg²⁺, Ca²⁺, Sr²⁺, Ba²⁺, Mn²⁺, Fe²⁺, Co²⁺, Ni²⁺, Zn²⁺, Gd³⁺, Fe³⁺, La³⁺, Zr⁴⁺ oder Ce⁴⁺,besonders bevorzugt sind Mg²⁺, Ca²⁺ oder deren Mischungen.

Die Schichtaufweitung d(001) der synthetischen Smectite durch den Kationentausch in B) beträgt 14 bis 33 Å, bevorzugt 15 bis 26 Å, besonders bevorzugt bis 18 bis 22 Å. Die Messung der Schichtaufweitung d(001) erfolgt an einer Probe unter Wasser. Idealerweise wird das trockene Schichtsilicat wässrig aufgeschlämmt und als Schmierpräparat in feuchtem Zustand auf einem waagrechten Träger in einem Pulverdiffraktometer mit Bragg-Brentano-Geometrie analysiert.

Die Kationenaustauschkapazität in B) (Bestimmung nach G. Lagaly, F. Bergaya, L. Ammann,Clay Miner. 2005, 40 441-453) derartiger synthetischer Smectite liegt typischerweise im Bereich von 70 bis 180 meq/100g Feststoff, bevorzugt 80 bis 170 meq/100g Feststoff, besonders bevorzugt 90 bis 160 meq/100g Feststoff.

Der anschließende Kationenaustausch in C) erfolgt durch Zugabe eines Überschusses an Salzlösung des entsprechenden wasserlöslichen Salzes und abschließendem Waschen mit entionisertem Wasser. Dieser Schritt kann mehrmals wiederholt werden.

Zwischenschichtkationen nach Schritt C) sind bevorzugt K⁺, Rb⁺, Cs⁺ oder deren Mischungen.

Die Kationenaustauschkapazität in C) (Bestimmung nach G. Lagaly, F. Bergaya, L. Ammann,Clay Miner. 2005, 40 441-453) derartiger nicht mehr quelltähiger synthetischer Smectite **ohne** vorherige physikalische Dispergierung ist typischerweise 1 bis 30 meq/100g Feststoff bevorzugt kleiner 1 bis 20 meq/100g Feststoff, besonders bevorzugt 5 bis 10 meq/100g Feststoff und wird lediglich durch die äußeren Oberflächen vorgegeben.

Die Kationenaustauschkapazität in C) (Bestimmung nach G. Lagaly, F. Bergaya, L. Ammann,Clay Miner. 2005, 40 441-453) derartiger nicht mehr quellfähiger synthetischer Smectite mit vorheriger physikalischer Dispergierung ist 10 bis 180 meq/100g Feststoff, bevorzugt 20 bis 100 meq/100g Feststoff, besonders bevorzugt 30 bis 80 meq/100g Feststoff und wird lediglich durch die äußeren Oberflächen vorgegeben.

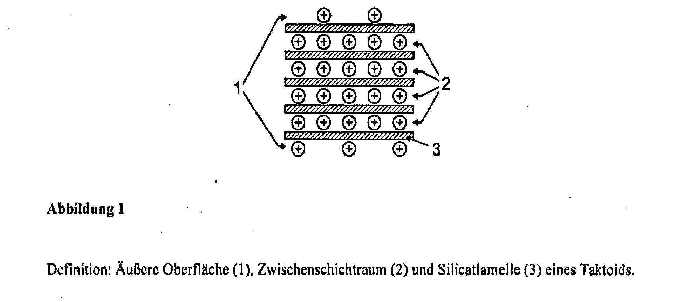

Als äußere Oberfläche wird hier die obere und untere Basalfläche eines Taktoids bezeichnet. Zwischenschichtraum bezeichnet das Innere eines Taktoids (vgl. Figur 1).

Die Schichtaufweitung d(001) der synthetischen Smectite in C) beträgt < 14 Å, bevorzugt < 13 Å, besonders bevorzugt < 11 Å. Die Messung der Schichtaufweitung d(001) erfolgt an einer Probe unter Wasser. Idealerweise wird das trockene Schichtsilicat wässrig aufgeschlämmt und als Schmierpräparat in feuchtem Zustand auf einem waagrechten Träger in einem Pulverdiffraktometer mit Bragg-Brentano-Geometrie analysiert.

Das nach Schritt C) erhaltene Material kann getrocknet oder unmittelbar gemäß D) weiterverarbeitet werden, wobei die vorherige Trocknung bevorzugt ist. Die Trocknung kann thermisch, mittels Sprühtrockner oder Gefriertrocknung erfolgen. Bevorzugt sind Sprüh- und Gefriertrocknung.

Die Oberflächenmodifizierung in D) erfolgt bevorzugt mittels kationischer Verbindungen des Typs Ammonium bzw. -inium oder Phosphonium/-inium sowie kationischen Metallkomplexen für die Flächen. Diese kationischen Verbindungen können funktionelle Gruppen tragen und/oder weitere Substitutionen aufweisen. Die Kantenmodifizierung erfolgt bevorzugt über Silane.

Setzt man kationische Moleküle wie z.B. Ammonium- oder Phosphoniumverbindungen oder Metallkomplexe zur Oberflächenmodifizierung ein, so wird der Modifikator in einem Verhältnis [Modifikator / Kationenaustauschkapazität des Schichtsilicates] bevorzugt von 0,8:1 bis 4:1, besonders bevorzugt im Verhältnis 1:1 bis 1,5:1 eingestellt. Als Wert der Kationenaustauschkapazität wird der nach G. Lagaly, F. Bergaya, L. Ammann, Clay Miner. 2005, 40 441-453 ermittelte Wert der dehydratisierten Smectite in C) verwendet.

Die Oberflächenmodifizierung in D) erfolgt gemäß der üblichen Prozedur für die Organophilierung von Schichtsilicaten (J. W. Jordan, J.Phys.Chem. 1949, 53 294-306). Das exfolierte und nicht mehr quellfähige Schichtsilicat aus C) wird mit einer Lösung eines wasserlöslichen Salzes enthaltend den kationischen Modifikators gemischt und dabei geschüttelt und mit entionisiertem Wasser anionenfrei gewaschen. Bevorzugt wird dieser Schritt mehrmals wiederholt. Der Modifikator wird in einem Verhältnis [Modifikator-Kation / Kationenaustauschkapazität des Schichtsilicates] bevorzugt von 0,8:1 bis 4:1, besonders bevorzugt im Verhältnis 1:1 bis 1,5:1 eingesetzt. Als Wert der Kationenaustauschkapazität wird der nach G. Lagaly, F. Bergaya, L. Ammann, Clay Miner. 2005, 40 441-453 ermittelte Wert der dehydratisierten Smectite in C) verwendet. Bei Verwendung kationischer Polyelektrolyte wird ein Verhältnis von kationischen Gruppen zur Kationenaustauschkapazität des Schichtsilicates bevorzugt von 0,8:1 bis 4:1, besonders bevorzugt im Verhältnis 1:1 bis 1,5:1 eingestellt.

Das nach Schritt D) erhaltene Produkt kann getrocknet oder in wässriger Dispersion weiterverarbeitet werden wobei die vorherige Trocknung bevorzugt ist. Die Trocknung kann thermisch, mittels Sprühtrockner oder Gefriertrocknung erfolgen. Bevorzugt sind Sprüh- und Gefriertrocknung.

Erfindungsgemäße Schichtsilicattaetoide können zur Herstellung von Polymerkompositen in alle gängigen Polymere eingebracht werden, die durch Polykondensation, Polyaddition, radikalische Polymerisation, ionische Polymerisation und Copolymerisation hergestellt wurden. Beispiele für derartige Polymere sind Polyurethane, Polycarbonat, Polyamid, PMMA, Polyester, Polyolefine, Kautschuk, Polysiloxane, EVOH, Polylactide, Polystyrol, PEO, PPO, PAN, Polyepoxide.

Eine Einbringung in Polymere kann mittels gängiger Techniken wie bspw. Extrusion, Knetverfahren, Rotor-Stator-Verfahren (Dispermat, Ultra-Turrax, etc.), Mahlverfahren (Kugelmühle etc.) oder Strahidispergierung erfolgen und hängt ab von der Viskosität der Polymeren.

### Beispiele

Röntgenografische Analysen: Die Messung der Schichtaufweitung d(001) erfolgt an einer Probe unter Wasser bzw. bei 40 % rel. Luftfeuchte. Idealerweise wird das trockene Schichtsilicat wässrig aufgeschlämmt und als Schmierpräparat in feuchtem Zustand auf einem waagrechten Träger in einem Pulverdiffraktometer mit Bragg-Brentano-Geometrie analysiert. Die charakteristischen Messgrößen waren der d(001)-Reflex (entspricht dem Schichtabstand) sowie die Halbwertsbreite des d(001)-Reflexes des Schichtsilicates.
Kationenaustauschkapazität KAK: Die Bestimmung der KAK erfolgte entsprechend G. Lagaly, F. Bergaya, L. Ammann, Clay Miner. 2005, 40 441-453.
Sauerstoffbarriere: Die Bestimmung der Sauerstoffbarriere erfolgte entsprechend DIN 53380, Teil 3, mit einem Meßgerät der Firma Modern Controls, Inc. bei einer Temperatur von 23 °C mit reinem Sauerstoff. Die rel. Feuchte von Messgas und Trägergas betrug 50 %. Die Werte wurden auf 100 µm Schichtdicke normiert.
Genamin S020, Stearyl amine ethoxylate, Clariant Produkte (Deutschland GmbH), Sulzbach, Deutschland
Desmodur VP KA 8697, Prepolymer, NCO-Gehalt ca. 8,4 %, Viskosität ca. 5000 mPas (50 °C), Funktionalität 2, Molmasse 970 g/mol, Bayer MaterialScience AG, Leverkusen, DE
Desmophen® 670: Schwach verzweigter, hydroxylgruppenhaltiger Polyester, Iösemittelfrei, mit einem Hydroxylgehalt von 4,3 %, einer Viskosität von 3100 mPa.s (75 DEG C) und einem Equivalentgewicht von 395, Bayer MaterialScience AG, Leverkusen, DE
Polypropylenfolie coronabehandelt, Typ CPP40W von Petroplast GmbH, Am Blankenwasser 3, 41468 Neuss
Cloisite Na+; Natrium-Montmorillonit, Southern Clay Products Inc., 1212 Church Street, Gonzales, Texas 78629-USA, KAK 86 meq/100g
Nanofil 757; Natrium-Montmorillonit, Süd-Chemie AG, Moosburg, KAK 70 meq/100g, d(001)-Reflex 11,7 Å (Schichtabstand)
KCI; ≥99,5% p.a.; Carl Roth GmbH&Co. KG, Schoemperlenstr. 3-5, 76185 Karlsruhe
Li2CO3; >99%; Merck Eurolab GmbH, John-Deere-Str. 5, 76646 Bruchsal
Na2CO3; >99,5%; Sigma-Aldrich Chemie GmbH, Eschenstraße 5; 82024 Taufkirchen
Kieselsäure (SiO2 x H2O): > 99,5%; Sigma-Aldrich Chemie GmbH, Eschenstraße 5; 82024 Taufkirchen
MgCO3Mg(OH)2; extra pure; Fischer Scientific GmbH, Im Heiligen Feld 17; 58239 Schwerte
LiF; >99%; Merek Eurolab GmbH, John-Deere-Str. 5, 76646 Bruchsal
NaF; >99%; Sigma-Aldrich Chemie GmbH, Eschenstraße 5; 82024 Taufkirchen
MgF2; >97%; Sigma-Aldrich Chemie GmbH, Eschenstraße 5; 82024 Taufkirchen
MgCl2 x 6 H2O; 99% p.a.; Grüssing GmbH, An der Bahn 4; 26849 Filsum
Quarz (SiO₂); p.a.; Merek KGaA Frankfurter Str. 250; 64293 Dannstadt (Quarz wird vor Gebrauch 3 Tage bei 500°C ausgeheizt)
NaF; Puratronic 99,995%; Alfa Aesar GmbH & Co KG, Zeppelinstrasse 7; 76185 Karlsruhe
MgF₂; 99,9%; ChemPur, Rüppurrer Straße 92; 76137 Karlsruhe
LiF; 99,9+%; ChemPur, Rüppurrer Straße 92; 76137 Karlsruhe
MgO; 99,95%; Alfa Aesar GmbH & Co KG, Zeppelinstrasse 7; 76185 Karlsruhe
Molybdäntiegel werden durch die Mechanik-Abteilung der Universität Bayreuth durch Erodieren massiver Molybdän-Stangen (Plansee AG, A-6600 Reutte) mit 2,5 cm Durchmesser hergestellt.
Glaskohlenstofftiegel werden von der Firma HTW Hochtemperatur-Werkstoffe GmbH, Gemeindewald 41; 86672 Thierhaupten bezogen.

### Beispiel 1a: Herstellung von A (Na_{0,5}-Hectorit, geschlossenes Tiegelsystem)

Die Synthese des Na-Hectorites [Na_{0,5}]^{inter} [Mg_{2,5} Li_{0.5}]^{oct} [Si₄]^{tet} O₁₀F₂ erfolgt nach einer modifizierten Vorschrift von Breu et al.^{[12]}.

In einen hochreinen, ausgeheizten Molybdäntiegel werden die Verbindungen NaF (99,995%; 2,624g), MgF₂ (99,9%; 3,893g), LiF (99,9+%; 1,621g), MgO (99,95%; 10,076g) und Quarz (SiO₂ p.a.; 20,04g) in der genannten Reihenfolge schichtweise in einer Glovebox eingewogen. Der Tiegel wird in noch offenen Zustand im Hochvakuum induktiv erhitzt bis der obere Tiegelrand rot glüht. Stärkeres Erhitzen würde die unten liegenden leichter flüchtigen Fluoride austreiben. Diese Temperatur wird 20 min gehalten, nach Abschalten der Heizung wird das Vakuum über Nacht beibehalten um eventuell vorhandenes Restwasser zu entfernen.

Der Tiegel wird gasdicht verschweißt und manuell geschüttelt um die Edukte zu durchmischen. Dieser Tiegel wird in einer Vorsynthese im Hochvakuum durch induktive Heizung gleichmäßig auf ca. 1800°C für 10 min erhitzt. Nach dem Erkalten wird der Tiegel für die Hauptsynthese in einen Graphit-Drehrohrofen überführt und unter Argon innerhalb 120 min auf 1750°C erhitzt. Die Temperatur wird für 1 h gehalten, danach kühlt man innerhalb von 8 min von 1750°C auf 1300°C und von 1300°C auf 1050°C innerhalb von 25 min ab. Nach diesem Schritt wird durch Abschalten des Ofens die Temperatur auf RT gesenkt.

Nach dem Aufbrechen des Tiegels wird das hygroskopische Schichtsilicat als farbloser Feststoff erhalten. Da der Molybdäntiegel nach Gebrauch aufgebrochen wird, kann er nur einmal verwendet werden.

Identifikation: d(001) = 12,3 Å (bei ca. 40% rel. Luftfeuchte) 15,1 Å (unter Wasser). Halbwertsbreite_{[001]} des Na-Hectorits = 0,08° (bei ca. 40% rel. Luftfcuchte).

Der gewaschene und gefriergetrocknete Na-Hectorit ist ein weisses Pulver mit einer Kationenaustauschkapazität von 97 meq/100g. In Rasterelektronenmikroskopischen Aufnahmen erkennt man mittlere Taktoidgrößen von 3-20µm (für die Präparation werden wässrige Schichtsilicatdispersionen auf einen Siliziumwafer aufgebracht und nach dem Trocknen im REM betrachtet; die Taktoidgröße bezieht sich auf den Flächendurchmesser der Primär-Taktoide).

### Beispiel 1b: Herstellung von A (Na_{0,6}-Hectorit, offenes Tiegelsystem)

Die Synthese des Na-Hectorites [Na_{0,6}]^{inter} [Mg_{2,4} Li _{0,6}]^{oct} [Si₄]^{tet} O₁₀F₂ erfolgt über ein Alkali-Glas (genannt: Vorstufe α) der Zusammensetzung Li₂Na₂Si₆O₁₄. Dieses Glas wird hergestellt, indem man die Salze Li₂CO₃ (4,90g), Na₂CO₃ (7,03g) und Kieselsäure (SiO₂ x nH₂O; 25,97g) fein vermischt und 1h bei 1100° unter Argon in einem Glaskohlenstofftiegel induktiv erhitzt.

Parallel wird eine zweite Vorstufe (genannt: Vorstufe β) hergestellt, indem man MgCO₃Mg(OH)₂ (18,40g) und Kieselsäure (SiO₂ x nH₂O; 18,70) in 1h bei 900°C in einem Aluminiumoxid-Tiegel im Kammerofen erhitzt.

Nach dem Erkalten werden 17,55g der Vorstufe α sowie die gesamte Menge der Vorstufe β pulverisiert und mit 0,67g LiF (>99%), 0,54g NaF (>99%) sowie 8,30g MgF₂ (>97%) fein vermischt. Diese Mischung wird in einen Glaskohlenstofftiegel unter Argon schnell auf 1260°C induktiv erhitzt und 15 min auf dieser Temperatur belassen. Nach diesem Schritt wird durch Abschalten des Ofens die Temperatur auf RT gesenkt.

Das hygroskopische Schichtsilicat wird als farbloser bzw. graustichiger Feststoff erhalten.

Identifikation: d(001) = 12,3 Å (bei ca. 40% rel. Luftfeuchte) 15,0 Å (unter Wasser). Halbwertsbreite_{[001]} des Na-Hectorits = 0,09° (bei ca. 40% rel. Luftfeuchte).

Der Na-Hectorit weist eine Kationenaustauschkapazität von 158 meq/100g auf. In Rasterelektronenmikroskopischen Aufnahmen erkennt man mittlere Taktoidgrößen von 5-50µm (für die Präparation werden wässrige Schichtsilicatdispersionen auf einen Siliziumwafer aufgebracht und nach dem Trocknen im REM betrachtet; die Taktoidgröße bezieht sich auf den Flächendurchmesser der Primär-Taktoide).

### Beispiel 1e: Herstellung von A (Na_{0,5}-Hectorit, offenes Tiegelsystem)

Die Synthese des Na-Hectorites [Na_{0,5}]^{inter} [Mg_{2,5} Li _{0,5}]^{oct} [Si₄]^{tet} O₁₀F₂ erfolgt über ein Alkali-Glas (genannt: Vorstufe α) der Zusammensetzung Li₂Na₂Si₆O₁₄. Dieses Glas wird hergestellt, indem man die Salze Li₂CO₃ (4,90g), Na₂CO₃ (7,03g) und Kieselsäure (SiO₂ x nH₂O; 25,97g) fein vermischt und 1h bei 1100°C unter Argon in einem Glaskohlenstofftiegel induktiv erhitzt.

Parallel wird eine zweite Vorstufe (genannt: Vorstufe γ) hergestellt, indem man MgCO₃Mg(OH)₂ (19,74g) und Kieselsäure (SiO₂ x nH₂O; 21,45) in 1h bei 900°C in einem Aluminiumoxid-Tiegel im Kammerofen erhitzt.

Nach dem Erkalten werden 17,57g der Vorstufe α sowie die gesamte Menge der Vorstufe γ pulverisiert und 8,06g MgF₂ (>97%) fein vermischt. Diese Mischung wird in einen Glaskohlenstofftiegel unter Argon schnell auf 1325°C induktiv erhitzt und 15 min auf dieser Temperatur helassen.

Identitikation: d(001) = 12,3 Å (bei ca. 40% rel. Luftfeuchte) 15,2 Å (unter Wasser). Halbwertsbreite_{[001]} des Na-Hectorits = 0,09° (bei ca. 40% rel, Luftfeuchte).

Der Na-Hectorit weist eine Kationenaustauschkapazität von 125 meq/100g auf. In Rasterelektronenmikroskopischen Aufnahmen erkennt man mittlere Taktoidgrößen von 5-30µm (für die Präparation werden wässrige Schichtsilicatdispersionen auf einen Siliziumwafer aufgebracht und nach dem Trocknen im REM betrachtet; die Taktoidgröße bezieht sich auf den Flächendurchmesser der Primär-Taktoide).

Im Gegensatz zu Beispiel 1a wird bei 1b und 1c eine Glas-Vorstufe α als Hauptquelle für Li und Na verwendet. Der Dampfdruck dieses Glases ist wesentlich geringer als der Dampfdruck der binären Alkalifluoride wodurch die Synthese in einem offenen System ohne größere Substanzverluste überhaupt erst möglich wird. Da der Tiegel nicht druckdicht verschlossen werden muss, kann man von gasdicht verschweißten Molybdäntiegeln z.B. auf offene Glaskohlenstofftiegel größeren Volumens umsteigen. Diese Tiegel können problemlos wieder verwendet werden.

### Beispiel 2: Herstellung von B (Mg-Hectorit)

Der neutral gewaschene Na-Hectorit aus Beispiel 1a wird mit einer 1 molaren MgCl₂-Lösung versetzt und bei RT geschüttelt. Die Austauschlösung wird nach Zentrifugation 2 mal erneuert um das freigesetzte Na⁺ aus dem Gleichgewicht zu entfernen. Der Austausch wird so lange durchgeführt, bis er vollständig ist. Die Vollständigkeit des Austausches kann z.B. am Auftreten einer integralen 001-Serie (D. M. Moore, R. C. Reynolds, M. Duane, X-ray diffraction and the identification and analysis of clay minerals, Oxford Univ. Pr., Oxford 1997) des Mg-Hectorites oder am Na⁺-Gehalt des wässrigen Überstands erkannt werden.

Nachdem das Material mit vollentsalztem Wasser chloridfrei gewaschen wurde, konnte der Dispergierungs-/Exfolierungsschritt durchgeführt werden. Hierzu wurde der wässrig aufgeschlämmte Mg-Hectorit 40 Zyklen in einem Microfluidizer Modell M-11Y (Düsenvarianten Typ H30Z und H10Z in Reihe geschalten) bei 1,1 bis 1,3 kbar dispergiert. Halbwertsbreite_{[001]} nach diesem Exfolierungsschritt = 0,66° (bei ca. 40% rel. Luftfeuchte).

Mg-Hectorit: Identifikation: d(001) = 14,6 Å (bei ca. 40% rel. Luftfeuchte) 18,5 Å (unter Wasser). Halbwertsbreite_{[001]}= 0,07° (bei ca. 40% rel. Luftfeuchte). Die Kationenaustauschkapazität entspricht dem Na-Hectorit aus Beispiel 1).

### Beispiel 3: Herstellung von C (K-Hectorit)

Der 40 Zyklen im Microfluidizer vordispergierte, exfolierte Mg-Hectorit aus Beispiel 2 wird durch zwei Austauschzyklen (1,5 h bzw. über Nacht bei RT) mit 1 molarer KCl-Lösung in den K-Hectorit überführt. Nachdem man das Material mit vollentsalztem Wasser chloridfrei gewaschen hat, wurde es gefriergetrocknet.

K-Hectorit: Identifikation: d(001) = 10,6 Å (bei ca. 40% rel. Luftfeuchte) Halbwertsbreite_{[001]} = 1,45°. Der gewaschene und gefriergetrocknete K-Hectorit weist eine Kationenaustauschkapazität von 49 meq/100g auf. Dies entspricht in etwa 50 % der Vorstufe aus Beispiel 2.

### Beispiel 4a: Herstellung von D (_{surface}BHEDMA-_{bulk}K-Hectorit)

Der gefriergetrocknete K-Hectorit aus Beispiel 3 wird in wenig vollentsalztem Wasser aufgeschlämmt (ca. 20 g/l). Dazu gibt man einen 1,2-fachen Überschuss (bezogen auf die ermittelte Kationenauschkapazität des K-Hectorites von 49 meq/100g gibt man also ca. 59 meq auf 100g Schichtsilicat) des wässrig gelösten Modifikators BHEDMA und schüttelt für 5 min bei 25°C. Nach Waschen mit vollentsalztem Wasser wird das Material gefriergetrocknet.

_{surface}BHEDMA-_{bulk}K-Hectorit: Identifikation: d(001) = ∼11,3 Å (bei ca. 40% rel. Luftfeuchte) Halbwertsbreite_{[001]} = 2,03°.

### Beispiel 4b: Herstellung von D (_{surface}Genamin S020-_{bulk}K-Hectorit)

Der gefriergetrocknete K-Hectorit aus Beispiel 3 wird in wenig vollentsalztem Wasser aufgeschlämmt (ca. 20 g/l). Dazu gibt man einen 1,2-fachen Überschuss (bezogen auf die ermittelte Kationenauschkapazität des K-Hectorites von 49 meq/100g gibt man also ca. 59 meq auf 100g Schichtsilicat) des wässrig gelösten Modifikators Genamin S020 (als Hydrochlorid) und schüttelt für 5 min bei 25°C. Nach Waschen mit vollentsalztem Wasser, Ethanol/Wasser und Ethanol wird das Material in Cyclohexan dispergiert und daraus gefriergetrocknet.
_{surface}Genamin S020-_{bulk}K-Hectorit: Identifikation: d(001) = ∼11,5 Å (bei ca. 40% rel. Luftfeuchte) Halbwertsbreite_{[001]} = 1,99°.

### Beispiel 5: Herstellung Composit-Beschichtung mit organophiliertem Smectit

### Beispiel 5a:

Die Polyurethanvorstufe Desmodur VP KA 8697 wird der 0,75-fachen Menge (Gew.) Ethylacetat gelöst. Separat wird die zweite Polyurethanvorstufe Desmophen 670 sowie der _{suface}BHEDMA-_{bulk}K-Hectorit aus Beispiel 4a in der 1,3-fachen Menge (Gew.) Ethylacetat gelöst. Die jeweiligen Mengen werden abgestimmt, dass insgesamt ein Massenverhältnis Desmodur VP KA 8697/ Desmophen 670/ _{surface}BHEDMA-_{bulk}K-Hectorit von 60/35/5 Gew.% erreicht wird. Nachdem beide Komponenten vereinigt und gut durchmischt werden, entgast man kurz im Ultraschallbad. Diese Mischung wird unmittelbar auf eine Trägerfolie gerakelt und im Trockenschrank über Nacht bei 60°C ausgehärtet. Die derart beschichtete Trägerfolie ist transparent. Die Gasbarriere beträgt 134 cm³/(m²dbar). Die Gasbarriere der reinen PP-Trägerfolie liegt hier bei 800 cm³/(m²dbar) und die der PU-beschichteten, Silicatfreien PP-Trägerfolie bei 178 cm³/(m²dbar).

### Beispiel 5b:

Entspricht in der Durchführung Beispiel 5a, jedoch wird anstatt dem _{surface}BHPDMA-_{bulk}K-Hectorit aus Beispiel 4a der _{surface}Genamin S020-_{bulk}K-Hectorit aus Beispiel 4b verwendet. Die derart beschichtete Trägerfolie ist transparent und hat eine Gasbarriere von 158 cm³/(m²dbar).

### Vergleichsbeispiel 1: K-ausgetauschter Montmorillonit

Der kommerziell erhältliche Montmorillonit Cloisite-Na+ wird in drei Austauschzyklen (Dauer: 15 min, 13 h und 5,5 h bei RT) durch Zugabe 1 molarer KCl-Lösung in die K⁺-Form überführt. Nachdem man das Material mit vollentsalztem Wasser chloridfrei gewaschen hat, wurde es gefriergetrocknet.

Na-Montmorillonit vom Typ Cloisite-Na+; Identifikation: d(001) = 12,4 Å (bei ca. 40% rel. Luftfeuchte) Halbwertsbreite_{[001]} = 1,2°. Das Material weist eine Kationenaustauschkapazität von 86 meq/100g auf.

K-Montmorillonit; Identifikation: d(001) = 11,0 Å (bei ca. 40% rel. Luftfeuchte) Halbwertsbreite_{[001]} = 1,3°. Der gewaschene und gefriergetrocknete K-Montmorillonit weist eine Kationenaustauschkapazität von 78 meq/100g bereits nach 5 minütiger Austauschdauer auf (etwa 90% der ursprünglichen Austauschkapazität). Ein kommerzieller, nicht-synthetischer Montmorillonit läßt sich nicht in der gleichen Weise in erfindungsgemäße nicht-quellfähige Tactoide überführen.

### Vergleichsbeispiel 2: Herstellung eines organophilierten kommerziellen Montmorillonites.

Der Montmorillonit Nanofil 757 (Natrium-Montmorillonit, Süd-Chemie AG, Moosburg, KAK 70 meq/100g, d(001)-Reflex bzw. Schichtabstand 11,7 Å) wurde in vollentsalztem Wasser mit Hilfe eines Ultra Turrax T25 (Janke + Kunkel, IKA Labortechnik) zu 5 Gew.-% dispergiert. Zu dieser Dispersion wurde eine Lösung des Modifikators Genamin S020 in vollentsalztem Wasser hinzugefügt, die der 1,2 fachen Kationenaustauschkapazität des Montmorillonites entsprach. Die 2,5 Gew.-%-ige Dispersion wurde 24 h bei 60 bis 70 °C geschüttelt, anschließend bei 3500 g zentrifugiert. Nach dem Dekantieren wurde das Sediment in einer 1:1 Mischung aus EtOH und entionisiertem Wasser redispergiert, gewaschen und erneut zentrifugiert. Die Waschprozedur wurde dreimal wiederholt und die Vollständigkeit über Leitfähigkeitsmessung im Überstand kontrolliert. Anschließend wurde das Produkt gefriergetrocknet. Die Belegung lag bei 71 meq Genamin S020 / 100g (CHN-Analyse), was 100 % der KAK entsprich und der d(001)-Reflex bzw. Schichtabstand bei 24,6 Å.

### Vergleichsbeispiel 3: Herstellung Composit-Beschichtung mit organophiliertem Montmorillonit

Die Darstellung des Composit-Beschichtung mit einem organophiliertem Montmorillonit aus Vergleichsbeispiel 2 erfolgt analog Beispiel 5b. Es wurde eine transparent beschichtete Folie mit einer Gasbarriere von 167 cm³/(m²dbar) erhalten.

### Diskussion der Eigenschaften:

Das erfindungsmemäße Tactoid (Schichtstapel) aus synthetischem Kalium-Hecorit aus Beispiel 3 (Stufe C) zeigt einen Schichtabstand von 10,6 Å, d.h. liegt hier im nicht-quellfähigen Zustand vor, Hydratwasser kann quasi nicht in den Schichtzwischenraum eindringen. Die quellfähige Ausgangsstufe aus Beispiel 2 hat beispielsweise einen Schichtabstand von 14,6 Å, der bedingt ist durch die hydratisierten Mg- Zwischenschichtionen. Die Kationenaustauschkapazität KAK liegt bei 49 meq/100g in Beispiel 3 gegenüber 97 meq/100g in Beispiel 2. Das heißt, daß lediglich ca. 50 % der ursprünglichen KAK durch organische Kationen ausgetauscht werden können. Es werden primär die äußeren Oberflächen belegt, weniger Modifikator ist notwendig. Die Beispiele 4a und 4b belegen, daß keine starke Interkalation durch quarternäre Ammoniumverbindugnen auftritt. Die Schichtabstände liegen bei 11,3 bzw. 11,5 Å. Sterisch anspruchsvolle Modfikatoren führen nonnalerweise zu Schichtaufweitungen von > 20 Å. In Vergleichsbeispiel 2 ist ein mit Genamin S020 modifizierter, kommerzieller Montmorillonit aufgeführt. Hier wird eine Schichtaufweitung von 24,6 Å erhalten. Der Kationenaustausch erfolgt zu 100 % der anfänglichen KAK.

Trotz der geringeren Menge an Modifikator und den nicht interkaliebaren bzw. exfolierbaren Schichten lassen sich Kompositbeschichtungen mit verbesserten Eigenschaften wie eine Sauerstoffbarriere erhalten, was der gängigen Meinung widerspricht. So liegt die Gasbarriere bei Beschichtungen auf Basis erfindungsgemäßer Schichtsilicattactoide bei 134 cm³/(m²dbar) (Kompositbeschichtung Beispiel 5a aus Schichtsilicat Bsp. 4a) bzw. 158 cm³/(m²dbar) (Kompositbeschichtung Beispiel 5b aus Schichtsilicat Bsp. 4b) gegenüber 167 cm³/(m²dbar) (Kompositbeschichtung Vergleichsbeipiel 3 aus Schichtsilicat Vergleichsbeispiel 2) bzw. 178 der PU-beschichteten, Silicatfreien PP-Trägerfolie. Beispiel 5a zeigt, daß ein kleines Modifikatormolekül wie BHDEMA bessere Ergebnisse ergibt, als ein gängiges, langkettiges, schichtaufweitendes Molekül wie Genamin S020. Zur Herstellung von Polymer-Nanokompositen werden in der Literatur diese langkettigen "Alkylspacer" der Oniumkationen (z.B. Genamin S/T/O-Serien mit Stearyl-, Talgfett- oder Oleylresten) eingesetzt, welche durch die Aufweitung des Schichtabstandes die Exfolierung der Taktoide begünstigen. Die Flexibilität in der Oberflächenmodifizierung ist durch erfindungsgemäße, synthetische Schichtsilicate deutlich größer.

## Patentansprüche

1. Verfahren zur Herstellung von nicht-quellfähigen Schichtsilicat-Taktoiden in dem
A) synthetische Smectite der Formel [M_{n/Valenz}]^{inter} [M^{I} ᵢₙ M^{II}₀]^{oct} [M^{III}₄]^{tet} X₁₀Y₂ über Hochtemperatur-Schmelzsynthese hergestellt werden, wobei
M Metallkationen mit Oxidationsstufe 1 bis 3 sind
M^{I} Metallkationen mit Oxidationsstufe 2 oder 3 sind, bevorzugt Mg, Al, oder Fe
M^{II} Metallkationen mit Oxidationsstufe 1 oder 2 sind
M^{III} Atome mit Oxidationsstufe 4 sind
X Di-Anionen sind
Y Mono-Anionen sind
m ≤ 2,0 für Metallatome M^{I} der Oxidationsstufe 3; ≤ 3,0 für Metallatome M^{I} der Oxidationsstufe 2
o ≤ 1,0
Schichtladung n = 0,2 bis 0,8
B) das Zwischenschichtkation M falls es nicht bereits eine Hydrationsenthalpie von - 6282 bis - 406 [kJ/mol] bevorzugt von - 4665 bis -1360 [kJ/mol] aufweist durch Kationentausch gegen ein solches ersetzt und das Schichtsilicat im Wässrigen dispergiert wird
C) anschließend dann M durch Kationentausch gegen ein Kation mit Hydrationsenthalpie von -405 bis 0 [kJ/mol] bevorzugt -322 bis -277 [kJ/mol] ersetzt wird und
D) gegebenenfalls abschließend die äußeren Oberflächen durch kationische Verbindungen, ionische und nichtionische Tenside bzw. Amphiphile, Metallkomplexe, Polyelektrolyte, Polymere oder deren Vorstufen, oder Silane ganz oder teilweise belegt werden.

2. Verfahren gemäß Anspruch 1, **dadurch gekennzeichnet, dass** M = Li⁺, Na⁺, Mg²⁺, oder eine Mischung zweier oder mehrerer dieser Ionen, M^{I} = Mg²⁺, Al³⁺, Fe²⁺, Fe³⁺ oder eine Mischung zweier oder mehrerer dieser Ionen, M^{II} = Li⁺, Mg²⁺ oder eine Mischung dieser Ionen, M^{III} ein vierwertiges Siliziumkation, X = O²⁻ und Y = OH⁻ oder F⁻ ist.

3. Verfahren gemäß Anspruch 1 oder 2, **dadurch gekennzeichnet, dass** die Schichtladung n = 0,35 bis 0,65 ist.

4. Verfahren gemäß einem der Ansprüche 1 bis 3, **dadurch gekennzeichnet, dass** die Smectit-Synthese in Stufe A) im offenen Tiegelsystem durchgeführt wird.

5. Verfahren gemäß Anspruch 4, **dadurch gekennzeichnet, das** eine Glasstufe der allgemeinen Zusammensetzung wSiO₂·xM^{a}·yM^{b}·zM^{c} eingesetzt wird, wobei
w,x,y,z die folgenden Werte haben können 5 < w < 7 ; 0 < x < 4 ; 0 ≤ y < 2; 0 ≤ z < 1,5 sind,
M^{a},M^{b},M^{c} Metalloxide sind, wobei M^{a} ungleich M^{b} ungleich M^{c} sind.

6. Verfahren gemäß einem der Ansprüche 1 bis 5, **dadurch gekennzeichnet, dass** die Schichtaufweitung d(001) der synthetischen Smectite nach dem Kationentausch in Schritt C) < 14 Å liegt.

7. Nicht-quellfähige Schichtsilicat-Taktoide erhältlich nach einem Verfahren gemäß einem der Ansprüche 1 bis 6.

8. Verwendung von nicht-quellfähigen Schichtsilicat-Taktoiden gemäß Anspruch 7 zur Herstellung von Composite-Materialien.

9. Composite-Materialien umfassend oder erhältlich unter Verwendung von nicht-quellfähigen Schichtsilicat-Taktoide gemäß Anspruch 7.
